# EUROPÄISCHE PATENTANMELDUNG

(11) **EP 3 670 046 A1**
(43) Veröffentlichungstag der Anmeldung: **24.06.2020**
(21) Anmeldenummer: 18215105.0
(22) Anmeldetag: 21.12.2018
(51) Int. Cl.: B23B 33/00

(54) **MITNEHMEREINRICHTUNG**

(71) Anmelder: Neidlein-Spannzeuge GmbH, 72411 Bodelshausen (DE)
(72) Erfinder: Eberhardt, Ralf, 72379 Hechingen (DE); Widmann, Stefan, 72116 Mössingen (DE)
(74) Vertreter: DREISS Patentanwälte PartG mbB

(57) **Zusammenfassung**

Mitnehmereinrichtung (10) zur Drehmitnahme und Fixierung eines zwischen zwei Spitzen aufgenommenen Werkstücks, umfassend ein Mitnehmergehäuse (12), welches zum Antrieb um eine Drehachse (14) mit einer Antriebseinrichtung verbindbar ist, und mindestens ein Mitnehmerelement (52), welches in einer diesem Mitnehmerelement zugeordneten Mitnehmerelementführung (58) verschiebbar gelagert und mit einem freien Mitnehmerende mit (54) einer Stirnseite eines Werkstücks oder mit einem in die Stirnseite eingreifenden Zwischenelement in Eingriff bringbar ist, wobei die Mitnehmereinrichtung eine Spanneinrichtung (66) mit mindestens einem hydraulisch betätigbaren Spannelement (64) aufweist, welches das mindestens eine Mitnehmerelement wahlweise für eine Verschiebung in dessen Mitnehmerelementführung freigibt oder das mindestens eine Mitnehmerelement spielfrei einspannt.

## Beschreibung

Die Erfindung betrifft eine Mitnehmereinrichtung zur Drehmitnahme und Fixierung eines zwischen zwei Spitzen aufgenommenen Werkstücks, umfassend ein Mitnehmergehäuse, welches zum Antrieb um eine Drehachse mit einer Antriebseinrichtung verbindbar ist, und mindestens ein Mitnehmerelement, welches in einer diesem Mitnehmerelement zugeordneten Mitnehmerelementführung verschiebbar gelagert und mit einem freien Mitnehmerende mit einer Stirnseite eines Werkstücks oder mit einem in die Stirnseite eingreifenden Zwischenelement in Eingriff bringbar ist.

Solche Mitnehmereinrichtungen werden auch als "Stirnseitenmitnehmer" oder "Stirnmitnehmer" bezeichnet und sind beispielsweise aus der DE 195 34 073 A1 bekannt. Derartige Mitnehmereinrichtungen ermöglichen es, die Außenfläche von Werkstücken in derselben Aufspannung in ihrer gesamten Länge zu bearbeiten; anders als beispielsweise bei Backenfuttern, welche ein Werkstück von radial außen umgreifen, sodass in diesem Bereich das Werkstück nicht in derselben Aufspannung bearbeitet werden kann.

Zur Bearbeitung eines Werkstücks wird das Werkstück üblicherweise zwischen zwei Spitzen eingespannt, welche dazu dienen, das Werkstück zentrisch genau zu positionieren. Das mindestens eine Mitnehmerelement ist üblicherweise von der Drehachse radial beabstandet angeordnet und dient zur Fixierung und insbesondere zur Drehmitnahme des Werkstücks. Zu diesem Zweck kann das mindestens eine Mitnehmerelement mit seinem freien Ende in Eingriff mit einer Stirnseite des Werkstücks gebracht werden.

Aus der DE 1 128 255 B ist ferner eine Mitnehmereinrichtung bekannt, bei der die freien Enden mehrerer Mitnehmerelemente mit einem scheibenförmigen Zwischenelement zusammenwirken, welches seinerseits in Eingriff mit der Stirnseite eines in Drehrichtung anzutreibenden Werkstücks gebracht werden kann.

Insbesondere bei der Bearbeitung von Werkstücken, bei welcher die Drehbewegung des Werkstücks einerseits und eine Raumlage eines Werkzeugs andererseits miteinander koordiniert werden müssen, ist eine besonders genaue, in Drehrichtung möglichst spielfreie Drehmitnahme des Werkstücks erforderlich, um eine hohe Fertigungsgenauigkeit zu erreichen. Dies ist beispielsweise bei einer Zahnradschleif- oder Zahnradwälzfräsbearbeitung, oder auch bei sonstigen Bearbeitungsvorgängen zur Herstellung von Nuten, Gewinden oder Konturen der Fall. Ferner gibt es Anwendungsfälle, bei denen das zwischen den Spitzen aufgenommene Werkstück in Drehrichtung stillsteht, damit von einer Drehbearbeitung abweichende Bearbeitungen, beispielsweise Fräsbearbeitungen, durchgeführt werden können. In solchen Fällen ist es erforderlich, das Werkstück möglichst spielfrei zu fixieren.

Hiervon ausgehend liegt der Erfindung die Aufgabe zugrunde, eine Mitnehmereinrichtung der eingangs genannten Art bereitzustellen, welche auf einfache Weise eine spielfreie Drehmitnahme und Fixierung eines Werkstücks ermöglicht und flexibel einsetzbar ist.

Diese Aufgabe wird bei einer Mitnehmereinrichtung der eingangs genannten Art erfindungsgemäß dadurch gelöst, dass die Mitnehmereinrichtung eine Spanneinrichtung mit mindestens einem hydraulisch betätigbaren Spannelement aufweist, welches das mindestens eine Mitnehmerelement wahlweise für eine Verschiebung in dessen Mitnehmerelementführung freigibt oder das mindestens eine Mitnehmerelement spielfrei einspannt.

Eine solche Mitnehmereinrichtung ermöglicht eine spielfreie Fixierung eines zu bearbeitenden Werkstücks. Insbesondere kann durch das spielfreie Einspannen des mindestens einen Mitnehmerelements eine Drehbewegung einer Antriebseinrichtung spielfrei auf das Werkstück übertragen werden. Auf diese Weise kann selbst bei hohen Drehgeschwindigkeiten eine hohe Fertigungsgenauigkeit erzielt werden.

Durch Betätigung des mindestens einen Spannelements kann das mindestens eine Mitnehmerelement selbst dann spielfrei in dem Mitnehmergehäuse eingespannt werden, wenn das mindestens eine Mitnehmerelement und dessen Mitnehmerelementführung geometrisch nicht exakt aufeinander abgestimmt sind. Das mindestens eine Mitnehmerelement kann also mit fertigungstechnisch einfach realisierbarem Spiel behaftet in dessen Mitnehmerelementführung geführt sein. Dies ermöglicht es, die Paarung zwischen dem mindestens einen Mitnehmerelement und dessen Mitnehmerelementführung kostengünstig herzustellen.

Das Radialspiel zwischen Mitnehmerelement und Mitnehmerelementführung kann beispielsweise einen Betrag im Bereich von 1 µm bis ca. 300 µm haben. Bevorzugt ist es jedoch, wenn das Radialspiel mindestens 5 µm, vorzugsweise mindestens 10 µm, insbesondere mindestens 20 µm, 40 µm oder 60 µm beträgt. Je größer das Radialspiel ist, desto kostengünstiger kann die Paarung zwischen dem mindestens einen Mitnehmerelement und dessen Mitnehmerelementführung hergestellt werden. Ferner ist es bevorzugt, dass das Radialspiel maximal 100 µm beträgt.

Eine erfindungsgemäße Mitnehmereinrichtung hat ferner den Vorteil, dass das mindestens eine Mitnehmerelement bei Verschleiß auf einfache Weise ausgetauscht werden kann, ohne dass das mindestens eine Mitnehmerelement für eine optimale Passung in dessen Mitnehmerelementführung abgestimmt sein muss. Auf diese Weise kann auch der Wartungsaufwand einer Mitnehmereinrichtung verringert werden.

Dadurch, dass das mindestens eine Spannelement hydraulisch, also unter Einwirkung eines Hydraulikmediums, betätigbar ist, kann auf einfache Weise eine hohe Spannkraft über das mindestens eine Spannelement auf das mindestens eine Mitnehmerelement übertragen werden.

Es ist möglich, dass lediglich ein Mitnehmerelement vorgesehen ist. Besonders bevorzugt ist es jedoch, wenn mehrere Mitnehmerelemente vorgesehen sind. Vorzugsweise sind 2, weiter vorzugsweise 3, weiter vorzugsweise mehr als 3 Mitnehmerelemente vorgesehen. Besonders bevorzugt ist es ferner, wenn die Mitnehmerelemente voneinander unabhängig in einer jeweiligen Mitnehmerelementführung verschiebbar gelagert sind, also jedem Mitnehmerelement eine eigene Mitnehmerelementführung zugeordnet ist. Auf diese Weise kann eine möglichst große Anzahl der vorhandenen Mitnehmerelemente in Eingriff mit der Stirnseite des in Drehrichtung anzutreibenden Werkstücks gebracht werden, und zwar unabhängig von einer möglicherweise unebenen Geometrie der Stirnseite des Werkstücks. Ferner ist es bevorzugt, wenn die Mitnehmerelemente entlang eines Umfangs um die Drehachse verteilt angeordnet sind. Auf diese Weise wird eine gleichmäßige Einspannung des Werkstücks ermöglicht.

Ferner ist es bevorzugt, wenn das freie Mitnehmerende des mindestens einen Mitnehmerelements zahnartig ausgebildet ist, sodass dieses sich in dem Werkstück verkrallen kann. Auf diese Weise wird eine besonders zuverlässige Fixierung des Werkstücks an der Mitnehmereinrichtung, insbesondere eine besonders zuverlässige Drehmitnahme des Werkstücks ermöglicht.

Es ist möglich, dass lediglich ein Spannelement vorgesehen ist, welches genau einem Mitnehmerelement zugeordnet ist. Es ist auch möglich, dass lediglich ein Spannelement vorgesehen ist, welches mehreren Mitnehmerelementen gemeinsam zugeordnet ist; in diesem Fall kann das eine Spannelement die Mitnehmerelemente gemeinsam wahlweise für eine Verschiebung in der jeweiligen Mitnehmerelementführung freigeben oder die Mitnehmerelemente spielfrei einspannen.

Besonders bevorzugt ist es, wenn mehrere Mitnehmerelemente und eine der Anzahl der Mitnehmerelemente entsprechende Anzahl von Spannelementen vorgesehen sind, wobei jedem Mitnehmerelement ein eigenes Spannelement zugeordnet ist. Dies ermöglicht eine besonders zuverlässige Einspannung des jeweiligen Mitnehmerelements. Es ist auch möglich, dass jedem Mitnehmerelement mehrere Spannelemente zugeordnet sind.

Das mindestens eine Spannelement kann separat von dem Mitnehmergehäuse bereitgestellt sein. Dabei kann das mindestens eine Spannelement aus einem Stück gefertigt sein oder mehrere Komponenten umfassen. Beispielsweise kann das mindestens eine Spannelement einen mehrschichtigen und/oder aus unterschiedlichen Materialien bestehenden Aufbau aufweisen. Es ist auch möglich, dass das mindestens eine Spannelement einstückig mit dem Mitnehmergehäuse ausgebildet ist.

Unter spielfrei wird im Rahmen der Erfindung insbesondere verstanden, dass das mindestens eine Mitnehmerelement und das Mitnehmergehäuse derart miteinander bewegungsgekoppelt sind, dass keine Relativbewegung zwischen dem mindestens einen Mitnehmerelement und dem Mitnehmergehäuse möglich ist. Das mindestens eine Mitnehmerelement ist in dem spielfrei eingespannten Zustand also weder axial in dessen Mitnehmerelementführung verschiebbar, noch ist eine radiale Verlagerung oder ein Verkippen des mindestens einen Mitnehmerelements innerhalb dessen Mitnehmerelementführung möglich.

Bei einer bevorzugten Ausführungsform bildet das mindestens eine Spannelement eine Führungsfläche für das mindestens eine Mitnehmerelement. Es ist möglich, dass das mindestens eine Spannelement eine von mehreren Führungsflächen der jeweiligen Mitnehmerelementführung bildet. In diesem Fall ist das jeweilige Mitnehmerelement also nur abschnittsweise durch das mindestens eine Spannelement geführt. Besonders bevorzugt ist es jedoch, wenn das mindestens eine Spannelement die einzige Führungsfläche der jeweiligen Mitnehmerelementführung bildet. Dies ermöglicht eine besonders zuverlässige Führung des mindestens einen Mitnehmerelements und - im betätigten Zustand des mindestens einen Spannelements - eine sichere Fixierung des mindestens einen Mitnehmerelements.

Bei einer weiteren bevorzugten Ausführungsform ist das mindestens eine Spannelement hülsenförmig ausgebildet. Das mindestens eine Spannelement kann somit das vorzugsweise zylindrisch ausgebildete mindestens eine Mitnehmerelement entlang dessen Umfang vollständig umgeben. Dies ermöglicht es, das mindestens eine Mitnehmerelement entlang dessen Umfang mit einer betragsmäßig gleichen Spannkraft zu beaufschlagen. Hierdurch wird ein besonders gleichmäßiges und zuverlässiges Einspannen des mindestens einen Mitnehmerelements begünstigt.

Unter hülsenförmig wird insbesondere eine hohlzylindrische Form verstanden, wobei das Verhältnis von Innendurchmesser zu axialer Erstreckung vorzugsweise kleiner 5, weiter vorzugsweise kleiner 2, weiter vorzugsweise kleiner 1, weiter vorzugsweise kleiner 0,5 ist. Besonders bevorzugt ist es, wenn das mindestens eine Spannelement das mindestens eine Mitnehmerelement über dessen gesamte axiale Erstreckung umgibt. Auf diese Weise kann das mindestens eine Mitnehmerelement über seine gesamte axiale Länge gleichmäßig eingespannt werden, was eine spielfreie Fixierung des mindestens einen Mitnehmerelements begünstigt und - im Vergleich zu einer punktuellen Einspannung des mindestens einen Mitnehmerelements bspw. mittels einer Fixierschraube - die Gefahr von Schwingungen während einer Bearbeitung reduziert.

Im Rahmen einer bevorzugten Ausführungsform kann das mindestens eine Spannelement als eine vom Mitnehmergehäuse separat bereitgestellt Hülse ausgebildet sein, welche in einer einem jeweiligen Mitnehmerelement zugeordneten Mitnehmerelementaufnahme des Mitnehmergehäuses einsetzbar ist. Eine solche Ausgestaltung ermöglicht eine besonders einfache Fertigung des Spannelements. Vorzugsweise ist die Hülse mit dem Mitnehmergehäuse fluiddicht verbunden. Besonders bevorzugt ist es, wenn die Hülse stoffschlüssig mit dem Mitnehmergehäuse verbunden ist, beispielsweise über eine Lötverbindung.

Im Rahmen einer alternativen bevorzugten Ausführungsform kann das mindestens eine Spannelement einstückig mit dem Mitnehmergehäuse ausgebildet sein. Beispielsweise ist es möglich, Mitnehmergehäuse und Spannelement mittels eines generativen Verfahrens (z.B. "3D-Druck") herzustellen.

Ferner ist es bevorzugt, wenn das mindestens eine Spannelement - zum Einspannen des mindestens einen Mitnehmerelements - mit Hydraulikmedium beaufschlagbar ist. Durch eine Beaufschlagung des mindestens einen Spannelements mit Hydraulikmedium kann eine Spannwirkung auf das mindestens eine Mitnehmerelement ausgeübt werden, sodass dieses in dessen Mitnehmerelementführung spielfrei eingespannt wird. Das mindestens eine Spannelement kann also durch Beaufschlagung mit Hydraulikmedium betätigt werden. Das Hydraulikmedium übt ferner eine Dämpfungswirkung auf das mindestens eine Mitnehmerelement aus, sodass während einer Bearbeitung auftretenden Schwingungen gedämpft werden können. Dies trägt zu einer hohen Fertigungsgenauigkeit bei.

Besonders bevorzugt ist es, wenn das mindestens eine Spannelement eine entlang des Umfangs des mindestens einen Mitnehmerelements gleichmäßige Spannwirkung auf das mindestens eine Mitnehmerelement ausübt. Hierdurch wird eine gleichmäßig Einspannung des mindestens einen Mitnehmerelements begünstigt. Unter Hydraulikmedium wird im Rahmen der Erfindung ein inkompressibles Medium, insbesondere ein Fluid verstanden, beispielsweise ein Hydraulik-Öl.

Besonders bevorzugt ist es, wenn das mindestens eine Spannelement durch Beaufschlagung mit unter Druck stehendem Hydraulikmedium elastisch verformbar ist. Vorzugsweise weist das mindestens eine Spannelement zumindest abschnittsweise eine verhältnismäßig dünne Wandung auf, welche durch Beaufschlagung mit unter Druck stehendem Hydraulikmedium elastisch, vorzugsweise nach radial innen, verformbar ist. Im Zuge der elastischen Verformung wird die Wandung vorzugsweise gegen das mindestens eine Mitnehmerelement gepresst, sodass dieses kraftschlüssig, insbesondere spielfrei, in dessen Mitnehmerelementführung fixiert wird. Ein Einspannen erfolgt somit ohne bewegliche Komponenten, wie es bspw. bei Spanneinrichtungen mit verschiebbaren Spannbacken oder Spannschrauben der Fall ist. Dies trägt zu einer besonders wartungsarmen und zuverlässigen Funktion der Spanneinrichtung bei. Dadurch, dass das mindestens eine Spannelement elastisch und damit reversibel verformbar ist, ist eine Vielzahl von Einspannzyklen möglich, was sich positiv auf die Lebensdauer der Mitnehmereinrichtung auswirkt.

Bei einer weiteren bevorzugten Ausführungsform grenzt das mindestens eine Spannelement an mindestens einen Druckraum an, in welchem ein Hydraulikmedium angeordnet ist. Durch Beaufschlagung des mindestens einen Druckraums mit unter Druck stehendem Hydraulikmedium ist eine Beaufschlagung des mindestens einen Spannelements und somit ein spielfreies Einspannen des mindestens einen Mitnehmerelements möglich. Vorzugsweise ist der mindestens eine Druckraum zwischen dem mindestens einen Spannelement und dem Mitnehmergehäuse, insbesondere zwischen dem mindestens einen Spannelement und der Innenwandung einer jeweiligen Mitnehmerelementaufnahme des Mitnehmergehäuses angeordnet.

Der mindestens eine Druckraum kann als Teil des mindestens einen Spannelements ausgebildet sein. Beispielsweise ist es denkbar, dass das mindestens eine Spannelement mindestens eine Druckkammer aufweist. Der mindestens eine Druckraum kann auch von dem Mitnehmergehäuse und dem mindestens einen Spannelement gemeinsam gebildet sein. Dies ermöglicht eine einfache Fertigung des mindestens einen Druckraums. Beispielsweise ist es möglich, dass das Spannelement an einer Außenseite eine Ausnehmung aufweist, welche mit der Innenwandung einer jeweiligen Mitnehmerelementaufnahme unter Bildung des mindestens einen Druckraums zusammenwirkt. Es ist auch möglich, dass das Mitnehmergehäuse an der Innenwandung der jeweiligen Mitnehmerelementaufnahme mindestens eine Ausnehmung aufweist, welche mit einer Wandung des mindestens einen Spannelements unter Bildung des mindestens einen Druckraums zusammenwirkt. Im Falle einer Ausgestaltung des mindestens einen Spannelements als Hülse ist es besonders bevorzugt, wenn der mindestens eine Druckraum als ein die Hülse umgebender Ringraum ausgebildet ist. Dies ermöglicht eine gleichmäßige Druckverteilung in radialer Richtung und somit ein zuverlässiges spielfreies Einspannen des mindestens einen Mitnehmerelements.

Bei einer weiteren bevorzugten Ausführungsform stützt sich das mindestens eine Mitnehmerelement an einem in einem Abstützraum angeordneten Hydraulikmedium ab. Vorzugsweise erfolgt die Abstützung entlang einer Verschiebeachse des mindestens einen Mitnehmerelements in dessen Mitnehmerelementführung. Dies ermöglicht es, durch Beaufschlagung des Abstützraums mit unter Druck stehendem Hydraulikmedium das mindestens eine Mitnehmerelement entlang der Verschiebeachse zu beaufschlagen, insbesondere das mindestens eine Mitnehmerelement entlang dessen Mitnehmerelementführung zu verschieben.

Besonders bevorzugt ist es, wenn mehrere Mitnehmerelemente vorgesehen sind, die sich an einem in einem gemeinsamen Abstützraum angeordneten Hydraulikmedium abstützen. Über das Hydraulikmedium stehen die Mitnehmerelemente in Wirkverbindung miteinander. Hierdurch können Unregelmäßigkeiten des Werkstücks, insbesondere Unebenheiten an der Stirnfläche des Werkstücks, selbsttätig ausgeglichen werden. Im Gegensatz zu aus dem Stand der Technik bekannten mechanischen Lösungen (bspw. durch Abstützung der Mitnehmerelemente an einer Taumelscheibe oder an einem auf einer Pfanne gelagerten Pendelring) stellt das Hydraulikmedium keinen harten Anschlag für das mindestens eine Mitnehmerelement dar, sondern weist eine gewisse Dämpfungsfunktion auf. Hierdurch kann die Gefahr einer Beschädigung der freien Mitnehmerenden, insbesondere bei einer Ausgestaltung mit zahnartigen Vorsprüngen, beim Einspannen eines Werkstücks verringert werden.

Ferner ist es bevorzugt, wenn der Abstützraum mit dem mindestens einen Druckraum fluidwirksam verbunden ist. Eine Druckänderung in dem Abstützraum führt folglich zu einer Druckänderung in dem mindestens einen Druckraum. Besonders bevorzugt ist es, wenn der Abstützraum eine der Anzahl der Mitnehmerelemente entsprechende Anzahl von Kolbenräumen und einen mit dem Kolbenraum / den Kolbenräumen fluidwirksam verbundenen Kopplungsraum umfasst, wobei jedem Mitnehmerelement jeweils ein Kolbenraum zugeordnet ist. Vorzugsweise sind der mindestens eine Kolbenraum und der Kopplungsraum als axiale Bohrungen in dem Mitnehmergehäuse ausgebildet, was eine einfache Fertigung begünstigt.

Besonders bevorzugt ist es ferner, wenn in jedem Kolbenraum ein in diesem verschiebbar gelagerter Kolben angeordnet ist, an welchem sich das jeweilige Mitnehmerelement abstützt. Es ist möglich, dass das jeweilige Mitnehmerelement sich über ein Verbindungselement an dem ihm zugeordneten Kolben abstützt. Es ist auch möglich, dass das jeweilige Mitnehmerelement und der ihm zugeordnete Kolben miteinander fest verbunden sind. Besonders bevorzugt ist es, wenn der jeweilige Kolben durch Beaufschlagung mit Hydraulikmedium in dem jeweiligen Kolbenraum verschiebbar ist. Dies ermöglicht es, das sich an dem jeweiligen Kolben abstützende Mitnehmerelement auf einfache Weise in dessen Mitnehmerelementführung zu verschieben. Besonders bevorzugt ist es, wenn der mindestens eine Kolbenraum koaxial mit der ihm zugeordneten Mitnehmerelementführung ausgebildet ist und eine Verschiebeachse des jeweiligen Kolbens kollinear oder zumindest parallel zu einer Verschiebeachse des jeweiligen Mitnehmerelements ausgerichtet ist. Dies begünstigt eine einfache Übertragung einer Verschiebebewegung des mindestens einen Kolbens in eine Verschiebebewegung des jeweiligen Mitnehmerelements.

Bei einer weiteren bevorzugten Ausführungsform weist die Mitnehmereinrichtung eine Beaufschlagungseinrichtung zur Beaufschlagung des mindestens einen Mitnehmerelements in Richtung des zu fixierenden Werkstücks auf. Dies ermöglicht es, das mindestens eine Mitnehmerelement in Eingriff mit einer Stirnseite eines zu fixierenden Werkstücks zu bringen und während einer Bearbeitung in Kontakt mit dieser zu halten. Hierdurch wird eine zuverlässige Drehmitnahme des Werkstücks ermöglicht.

Besonders bevorzugt ist es, wenn der Abstützraum mittels der Beaufschlagungseinrichtung mit Hydraulikmedium beaufschlagbar ist. Durch Beaufschlagung des Abstützraums mit Hydraulikmedium kann das mindestens eine Mitnehmerelement - welches sich, ggf. über einen ihm zugeordneten Kolben, an dem im Abstützraum angeordneten Hydraulikmedium abstützt - beaufschlagt werden. Insbesondere ist es möglich, durch Beaufschlagung des Abstützraums mit Hydraulikmedium das mindestens eine Mitnehmerelement entlang dessen Mitnehmerelementführung zu verschieben. Dies ermöglicht es, das mindestens eine Mitnehmerelement auf einfache Weise in Eingriff mit einem zu fixierenden Werkstück zu bringen.

Befindet sich das mindestens eine Mitnehmerelement in Eingriff mit dem Werkstück, führt eine weitere Beaufschlagung des Abstützraums zu einer Druckerhöhung in dem Abstützraum und somit zu einer Druckerhöhung in dem mit dem Abstützraum fluidwirksam verbundenen mindestens einen Druckraum. Durch eine Druckerhöhung in dem mindestens einen Druckraum kann das mindestens eine Spannelement betätigt werden und in Folge dessen das mindestens eine Mitnehmerelement spielfrei in dessen Mitnehmerelementführung eingespannt werden.

Durch eine Beaufschlagung des Abstützraums mit Hydraulikmedium ist folglich sowohl eine Zustellbewegung des mindestens einen Mitnehmerelements in Richtung des Werkstücks, als auch ein spielfreies Einspannen des mindestens einen Mitnehmerelements in dessen Mitnehmerelementführung möglich. Es sind also keine zusätzlichen, über die Arbeitsschritte des Zustellvorgangs der Mitnehmerelemente hinausgehenden Arbeitsschritte erforderlich, um das mindestens eine Mitnehmerelement spielfrei einzuspannen. Vielmehr erfolgt eine Selbstbetätigung der Spanneinrichtung im Zuge des Zustellvorgangs der Mitnehmerelemente, sodass auf besonders einfache Weise eine spielfreie Drehmitnahme eines Werkstücks möglich ist.

Ferner ist es bevorzugt, wenn die Beaufschlagungseinrichtung einen mit dem Abstützraum fluidwirksam verbundenen Beaufschlagungsraum und ein in dem Beaufschlagungsraum verschiebbar gelagerten Beaufschlagungskolben umfasst. Eine solche Ausgestaltung ermöglicht es, auf konstruktiv einfache Weise den Abstützraum mit Hydraulikmedium zu beaufschlagen. Vorzugsweise ist der Beaufschlagungsraum als axiale Bohrung in dem Mitnehmergehäuse ausgebildet und mit Hydraulikmedium gefüllt. Durch eine Verschiebung des Beaufschlagungskolbens kann Hydraulikmedium aus dem Beaufschlagungsraum verdrängt werden, wodurch der Abstützraum mit Hydraulikmedium beaufschlagt wird. Um eine Verschiebung des Beaufschlagungskolbens zu ermöglichen, kann die Beaufschlagungseinrichtung eine Stelleinrichtung umfassen, mittels welcher eine Stellkraft an den Beaufschlagungskolben angelegt werden kann. Die Stelleinrichtung kann bspw. einen hydraulischen, elektrischen oder pneumatischen Aktor aufweisen.

Bei einer weiteren bevorzugten Ausführungsform weist die Mitnehmereinrichtung einen in einer Zentrierspitzenaufnahme des Mitnehmergehäuses angeordneten Zentrierspitzenkörper auf, dessen Zentrierspitze mit einer Stirnseite eines Werkstücks in Eingriff bringbar ist. Besonders bevorzugt ist es, wenn der Zentrierspitzenkörper spielfrei und konzentrisch zur Drehachse in der Zentrierspitzenaufnahme fixiert ist. Dies ermöglicht spielfreie und zentrisch genaue Einspannung eines mit der Zentrierspitze in Eingriff stehenden Werkstücks, was eine hohe Rundlaufgenauigkeit begünstigt.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigen
- Fig. 1: eine perspektivische Ansicht einer ersten Ausführungsform einer Mitnehmereinrichtung;
- Fig. 2: eine Draufsicht der Mitnehmereinrichtung gemäß Fig. 1;
- Fig. 3a: eine Schnittansicht der Mitnehmereinrichtung gemäß Fig. 2 längs einer in Fig. 2 mit IIIa-IIIa bezeichneten Schnittebene;
- Fig. 3b: einen in Fig. 3a mit IIIb bezeichneten Ausschnitt in vergrößerter Darstellung;
- Fig. 4: eine perspektivische Ansicht der Mitnehmereinrichtung gemäß Fig. 2 längs einer in Fig. 2 mit lila - lila bezeichneten Schnittebene; und
- Fig. 5: eine Schnittansicht einer zweiten Ausführungsform einer Mitnehmereinrichtung längs einer in Fig. 3a mit V - V bezeichneten Schnittebene.

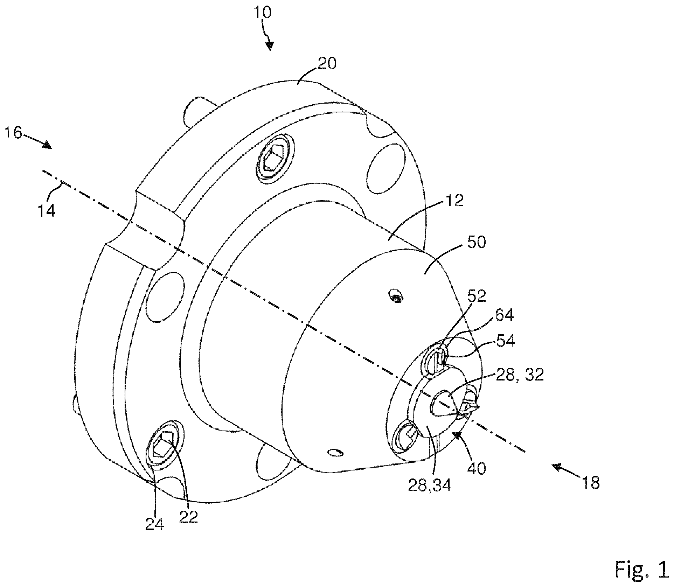

In Figur 1 ist eine erste Ausführungsform einer Mitnehmereinrichtung dargestellt, die insgesamt mit dem Bezugszeichen 10 bezeichnet ist. Die Mitnehmereinrichtung 10 weist ein Mitnehmergehäuse 12 zur Verbindung mit einer (nicht dargestellten) Antriebseinrichtung auf. Die Antriebseinrichtung ist beispielsweise durch einen Spindelstock einer Drehmaschine gebildet und dient zum Drehantrieb der Mitnehmereinrichtung 10 um eine Drehachse 14.

Das Mitnehmergehäuse 12 erstreckt sich im Wesentlichen entlang einer der Drehachse 14 entsprechenden zentralen Achse zwischen einem rückwärtigen Ende 16 und einem vorderen Ende 18.

Das Mitnehmergehäuse 12 weist an dem rückwärtigen Ende 16 einen Verbindungsabschnitt 20 auf, über den das Mitnehmergehäuse 12 mittels Befestigungsschrauben 22 mit der Antriebseinrichtung verbunden werden kann. Zu diesem Zweck weist der Verbindungsabschnitt 20 eine Mehrzahl von entlang eines Umfangs um die Drehachse 14 verteilt angeordneten, axialen Schraubenbohrungen 24 zur Aufnahme der Befestigungsschrauben 22 auf.

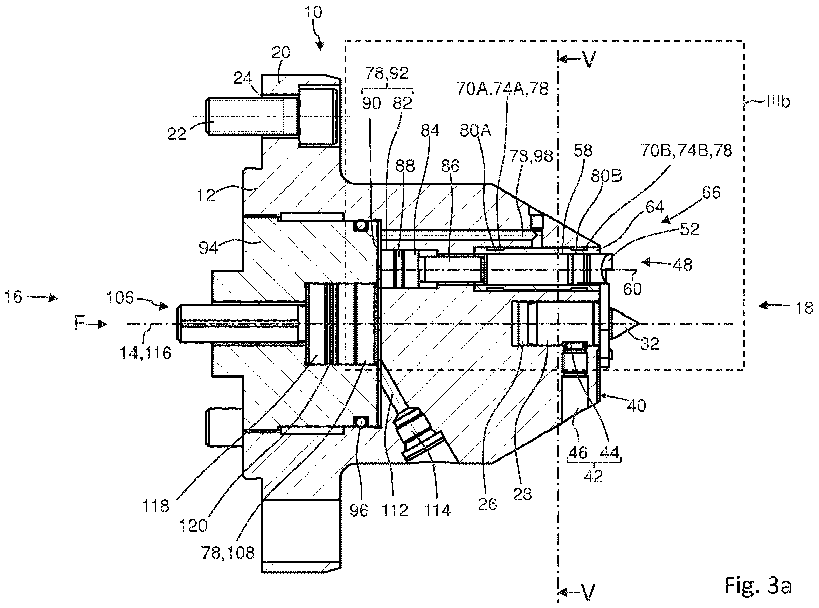

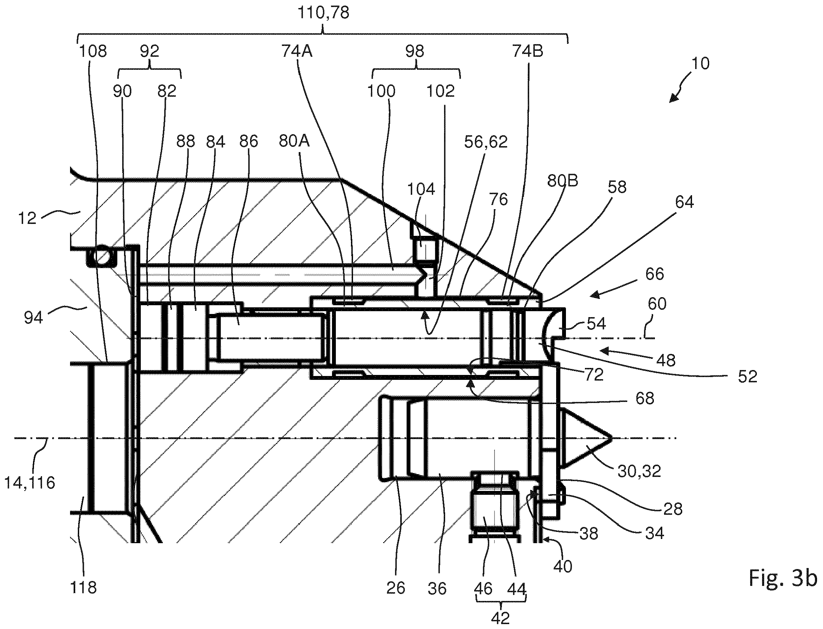

Das Mitnehmergehäuse 12 weist ferner an seinem vorderen Ende 18 eine Zentrierspitzenaufnahme 26 in Form einer zur Drehachse 14 konzentrischen axialen Bohrung auf (vgl. Figuren 3a und 3b). Die Zentrierspitzenaufnahme 26 dient zur Aufnahme eines Zentrierspitzenkörpers 28.

Der Zentrierspitzenkörper 28 weist einen vorderen ersten Abschnitt 30, welcher kegelförmig ausgebildet ist und eine Zentrierspitze 32 bildet, einen mittleren zweiten Abschnitt 34, welcher scheibenförmig ausgebildet ist, und einen hinteren dritten Abschnitt 36, welcher zylindrisch mit ausgebildet ist, auf (vgl. Figur 3b). Vorzugsweise sind die Abschnitte 30, 34, 36 einstückig miteinander ausgebildet.

In einem montierten Zustand des Zentrierspitzenkörpers 28 ist der Zentrierspitzenkörper 28 mit seinem hinteren dritten Abschnitt 36 in der Zentrierspitzenaufnahme 26 aufgenommen (vgl. Figur 3b). Der zweite Abschnitt 34 liegt dabei mit einer Rückseite 38 an einer Stirnseite 40 des Mitnehmergehäuses 12 an, sodass ein weiteres Einschieben des Zentrierspitzenkörpers 28 in die Zentrierspitzenaufnahme 26, bspw. bei Beaufschlagung der Zentrierspitze 32 durch ein Werkstück im Zuge eines Einspannvorgangs, verhindert wird.

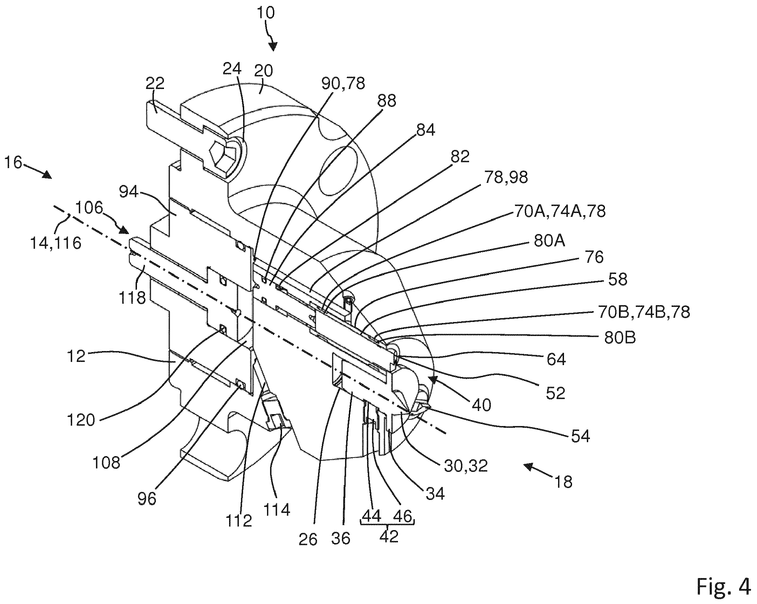

Der Zentrierspitzenkörper 28 ist ferner mittels einer Verliersicherungseinrichtung 42 in dem Mitnehmergehäuse 12 verliersicher gehalten. Zu diesem Zweck weist der Zentrierspitzenkörper 28 an seiner Außenwandung abschnittsweise eine axiale Nut 44 auf, in die ein gehäuseseitiger Stift 46 eingreift (vgl. Figuren 3a, 3b und 4).

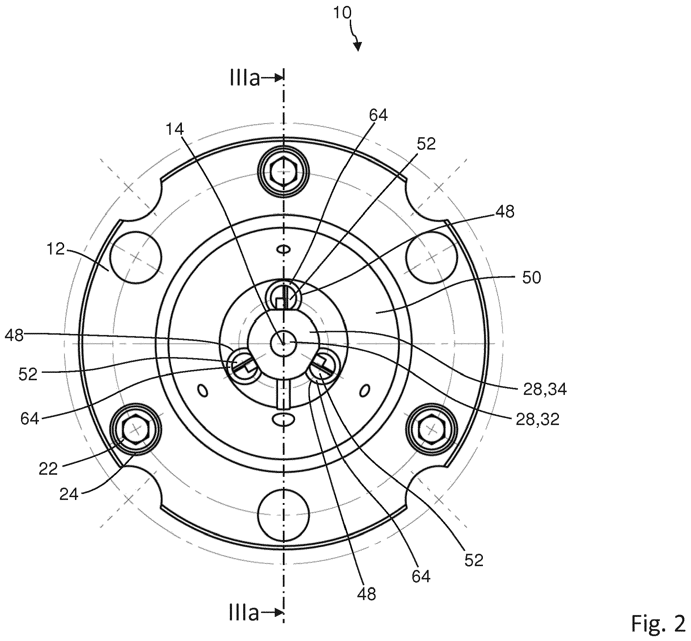

Das Mitnehmergehäuse 12 weist ferner an seinem vorderen Ende 18 drei Mitnehmerelementaufnahmen 48 auf, welche entlang eines Umfangs um die Drehachse 14 verteilt angeordnet sind (vgl. Figur 2). Die Mitnehmerelementaufnahmen 48 sind jeweils durch eine axiale Bohrung in einem ringförmigen Teil 50 ausgebildet, welches Bestandteil des Mitnehmergehäuses 12 oder drehfest mit diesem verbunden ist (vgl. Figur 1).

Die Mitnehmerelementaufnahmen 48 dienen jeweils zur Aufnahme eines Mitnehmerelements 52. Die Mitnehmerelemente 52 sind vorzugsweise zylindrisch ausgebildet und weisen jeweils ein freies Ende 54 auf. Die freien Enden 54 können beispielsweise zahnartig ausgebildet sein, damit sie mit einem zu bearbeitenden Werkstück in Eingriff gebracht werden können und sich dort verkrallen können (vgl. Figur 1).

Die Mitnehmerelemente 52 sind jeweils an einer Führungsfläche 56 einer dem jeweiligen Mitnehmerelement 52 zugeordneten Mitnehmerelementführung 58 entlang einer jeweiligen Verschiebeachse 60 geführt (in den Figuren 3a und 3b beispielhaft für ein Mitnehmerelement 52 dargestellt). Die Verschiebeachse 60 eines jeweiligen Mitnehmerelements 52 verläuft vorzugsweise parallel zu der Drehachse 14.

Die Führungsfläche 56 der jeweiligen Mitnehmerelementführung 58 ist durch die Innenwandung 62 eines in der jeweiligen Mitnehmerelementaufnahme 48 angeordneten Spannelements 64 gebildet (vgl. Figuren 3b und 4). Das jeweilige Spannelement 64 ist vorzugsweise als eine vom Mitnehmergehäuse 12 separat bereitgestellte, zylindrische Hülse ausgebildet, welche in die jeweilige Mitnehmerelementaufnahme 48 eingesetzt ist und mit dem Mitnehmergehäuse 12 fluiddicht, beispielsweise über eine Lötverbindung, verbunden ist. Bei nicht dargestellten Ausführungsformen können die Spannelemente 64 auch einstückig mit dem Mitnehmergehäuse 12 ausgebildet sein.

Die Spannelemente 64 sind Bestandteil einer Spanneinrichtung 66 und ermöglichen es jeweils, das ihnen zugeordnete Mitnehmerelement 52 wahlweise für eine Verschiebung in dessen Mitnehmerelementführung 58 freizugeben oder spielfrei einzuspannen.

Jedes Spannelement 64 weist an seiner Außenwandung 68 zwei ringförmige Ausnehmungen 70A, 70B auf, welche bei in die jeweilige Mitnehmerelementaufnahme 48 eingesetztem Spannelement 64 mit einer Innenwandung 72 der jeweiligen Mitnehmerelementaufnahme 48 jeweils einen Druckraum 74A, 74B bilden (in den Figuren 3a, 3b und 4 beispielhaft für ein Spannelement 64 dargestellt). Die Druckräume 74A, 74B eines jeweiligen Spannelements 64 sind über einen Verbindungskanal 76 miteinander fluidwirksam verbunden und mit einem Hydraulikmedium 78, bspw. einem Hydraulik-Öl, gefüllt.

Jedes Spannelement 64 weist ferner im Bereich des jeweiligen Druckraums 74A, 74B eine verhältnismäßig dünne Wandung 80A, 80B auf, welche durch Beaufschlagung des jeweiligen Druckraums 74A, 74B mit unter Druck stehendem Hydraulikmedium 78 elastisch nach radial innen verformbar ist. Im Zuge einer Verformung wird die jeweilige Wandung 80A, 80B gegen das dem jeweiligen Spannelement 64 zugeordnete Mitnehmerelement 52 gepresst, sodass dieses spielfrei in dem Mitnehmergehäuse 12 eingespannt wird. Es ist also durch Beaufschlagung des jeweiligen Spannelements 64 mit Hydraulikmedium 78 ein spielfreies Einspannen des jeweiligen Mitnehmerelements 52 möglich.

Die Mitnehmereinrichtung 10 weist ferner eine der Anzahl der Mitnehmerelemente 52 entsprechende Anzahl von Kolbenräumen 82 auf, wobei jedem Mitnehmerelement 52 jeweils ein Kolbenraum 82 zugeordnet ist. Die Kolbenräume 82 sind jeweils an demjenigen Ende der jeweiligen Mitnehmerelementführung 58 angeordnet, welches dem rückwärtigen Ende 16 des Mitnehmergehäuses 12 zugewandt ist (vgl. Figur 3a). Die Kolbenräume 82 sind jeweils durch eine Bohrung in dem Mitnehmergehäuse 12 gebildet, wobei die Bohrung vorzugweise koaxial zu der jeweiligen Mitnehmerelementführung 58 ausgebildet ist. Die Mittellängsachsen der jeweiligen Mitnehmerelementführung 58 und des ihr zugeordneten Kolbenraums 82 liegen also auf einer gemeinsamen Achse, welche insbesondere der Verschiebeachse 60 des jeweiligen Mitnehmerelements 52 entspricht.

In jedem Kolbenraum 82 ist ein in diesem verschiebbar gelagerter Kolben 84 angeordnet, an welchem sich das jeweils zugeordnete Mitnehmerelement 52, vorzugsweise mittels eines Verbindungselements 86, abstützt. Das Verbindungselement 86 kann auch einstückig mit dem Kolben 84 ausgebildet sein. Jeder Kolben 84 weist ferner eine Dichteinrichtung 88, vorzugsweise in Form eines in einer korrespondierenden Nut des Kolbens 84 angeordneten O-Rings, zur Abdichtung des Kolbens 84 gegenüber dem Kolbenraum 82 auf.

Die Kolbenräume 82 sind über einen als Ringraum ausgebildeten Kopplungsraum 90 miteinander fluidwirksam verbunden. Die Kolbenräume 82 und der Kopplungsraum 90 sind mit einem Hydraulikmedium 78 gefüllt und bilden einen gemeinsamen Abstützraum 92. Die Kolbenräume 82 und der Kopplungsraum 90 sind in Richtung des hinteren Endes 16 des Mitnehmergehäuses 12 mit einem hülsenförmigen Dichtelement 94 verschlossen. Das Dichtelement 94 ist vorzugsweise mit dem Mitnehmergehäuse 12 verschraubt und weist einen benachbart zu dem Abstützraum 92 angeordneten Dichtring 96 zur Abdichtung des Dichtelements 94 gegenüber dem Abstützraum 92 auf.

Jedes einem jeweiligen Spannelement 64 zugeordnete Paar an Druckräumen 74A, 74B ist über eine Hydraulikleitung 98 mit dem Abstützraum 92 fluidwirksam verbunden (in den Figuren 3a und 4 ist beispielhaft lediglich eine Hydraulikleitung 98 gezeigt). Die Druckräume 74A, 74B der einzelnen Spannelemente 64 sind folglich ebenfalls miteinander fluidwirksam verbunden. Die jeweilige Hydraulikleitung 98 ist vorzugsweise durch eine in den Kopplungsraum 90 mündende axiale Bohrung 100 und eine die Druckräume 74A, 74B speisende radiale Bohrung 102 im Mitnehmergehäuse 12 gebildet, wobei die radiale Bohrung 102 mittels eines Dichtstopfens 104 abgedichtet ist.

Die Mitnehmereinrichtung 10 weist ferner eine Beaufschlagungseinrichtung 106 zur Beaufschlagung des mindestens einen Mitnehmerelements 52 in Richtung des zu fixierenden Werkstücks auf.

Die Beaufschlagungseinrichtung 106 umfasst einen an den Kopplungsraum 90 angrenzenden und mit diesem fluidwirksam verbundenen Beaufschlagungsraum 108. Der Beaufschlagungsraum 108 ist vorzugsweise durch eine axiale Bohrung in dem Dichtelement 94 gebildet und mit Hydraulikmedium 78 gefüllt.

Der Beaufschlagungsraum 108, der Abstützraum 92, die Hydraulikleitungen 98 und die Druckräume 74A, 74B des jeweiligen Spannelements 64 bilden also einen gemeinsamen Hydraulikraum 110 für das Hydraulikmedium 78. Eine Druckänderung in einem der Räume führt folglich zu einer Druckänderung in den anderen Räumen. Das Befüllen des Hydraulikraums 110 erfolgt über eine Befüllleitung 112, welche nach Abschluss des Befüllvorgangs mittels eines Dichtstopfens 114 verschlossen wird (vgl. Figuren 3a und 4).

In dem Beaufschlagungsraum 108 ist ein in diesem entlang einer Verschiebeachse 116 verschiebbar gelagerter Beaufschlagungskolben 118 angeordnet. Die Verschiebeachse 116 entspricht vorzugsweise der Drehachse 14 oder verläuft zumindest parallel zu der Drehachse 14. Der Beaufschlagungskolben 118 weist ferner eine Dichteinrichtung 120, vorzugsweise in Form eines in einer korrespondierenden Nut des Beaufschlagungskolbens 118 angeordneten O-Rings, zur Abdichtung des Beaufschlagungskolbens 118 gegenüber dem Beaufschlagungsraum 108 auf.

Der Beaufschlagungskolben 118 kann durch Anlegen einer Stellkraft F aus der in den Figuren 3a und 4 dargestellten Ausgangslage entlang der Verschiebeachse 116 in Richtung auf das vordere Ende 18 des Mitnehmergehäuses 12 (also in Richtung auf ein zu fixierendes Werkstück, in Figur 3a "nach rechts") verschoben werden. Das Anlegen der Stellkraft F kann beispielsweise mittels einer (nicht dargestellten) Stelleinrichtung erfolgen, wobei die Stelleinrichtung bspw. einen hydraulischen, elektrischen oder pneumatischen Aktor aufweisen kann.

Eine Verschiebebewegung des Beaufschlagungskolbens 118 in Richtung des zu fixierenden Werkstücks führt zu einem Verdrängen von Hydraulikmedium 78 aus dem Beaufschlagungsraum 108. Das verdrängte Hydraulikmedium 78 wird über den Kopplungsraum 90 in die Kolbenräume 82 geleitet, wodurch die Kolben 84 und somit die sich an den Kolben 84 abstützenden Mitnehmerelemente 52 in Richtung des zu fixierenden Werkstücks verschoben werden bis die Mitnehmerelemente 52 mit ihren freien Enden 54 in Eingriff mit dem Werkstück gelangen. Durch Anlegen einer im Vergleich zu der Stellkraft F vorzugsweise betragsmäßig größeren Betätigungskraft können sich die freien Enden 54 der Mitnehmerelemente 52 in die Oberfläche des Werkstücks eingraben bis ein fester Anschlagpunkt erreicht ist. Eine weitere Beaufschlagung des Beaufschlagungskolbens 118 in Richtung des zu fixierenden Werkstücks führt schließlich aufgrund des festen Anschlags der Mitnehmerelemente 52 an dem Werkstück und der Inkompressibilität des Hydraulikmediums 78 zu einer Druckerhöhung in dem Hydraulikraum 110 und somit zu einer Druckerhöhung in den Druckräumen 74A, 74B.

Durch die Druckerhöhung in den Druckräumen 74A, 74B wird das jeweilige Spannelement 64 im Bereich der dünnen Wandungen 80A, 80B elastisch nach radial innen verformt, sodass die Wandungen 80A, 80B gegen das jeweilige Mitnehmerelement 52 gepresst werden. Auf diese Weise werden die Mitnehmerelemente 52 in ihrer jeweiligen Mitnehmerelementführung 58 kraftschlüssig und spielfrei eingespannt. In dem spielfrei eingespannten Zustand sind die Mitnehmerelemente 52 weder entlang der jeweiligen Verschiebeachse 60 verschiebbar, noch ist eine radiale Verlagerung oder ein Verkippen des jeweiligen Mitnehmerelements 52 in der jeweiligen Mitnehmerelementführung 58 möglich.

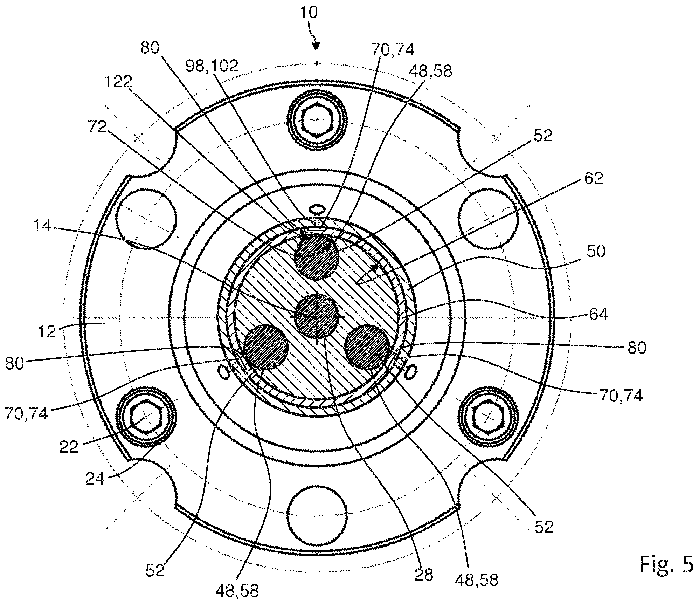

In Figur 5 ist eine zweite Ausführungsform einer Mitnehmereinrichtung 10 dargestellt, bei der mehrere Mitnehmerelemente 52 vorgesehen sind, jedoch - abweichend von der unter Bezug auf die Figuren 1 bis 4 beschriebenen Ausführungsform einer Mitnehmereinrichtung 10 - lediglich ein Spannelement 64 vorgesehen ist, welches den Mitnehmerelementen 52 gemeinsam zugeordnet ist.

Die Mitnehmerelemente 52 sind jeweils in einer Mitnehmerelementführung 58 geführt, wobei abweichend von der ersten Ausführungsform eine Führungsfläche 56 der jeweiligen Mitnehmerelementführung 58 durch die Innenwandung 72 der jeweiligen Mitnehmerelementaufnahme 48 gebildet ist.

Das Spannelement 64 ist bei der Ausführungsform gemäß Figur 5 als eine in das Mitnehmergehäuse 12 eingesetzte Hülse ausgebildet, wobei eine Innenwandung 62 des Spannelements 64 entlang eines die Mitnehmerelemente 52 umschließenden und deren Außenwandung (tangential) berührenden Umfangs verläuft. Es ist möglich, dass die Innenwandung 62 des Spannelements 64 eine (Teil-)führungsfläche 56 für das jeweilige Mitnehmerelement 52 bildet. Es ist auch möglich, dass die Innenwandung 62 des Spannelements 64 von dem jeweiligen Mitnehmerelement 52 durch eine verhältnismäßig dünne und elastisch verformbare Wandung 122 des Mitnehmergehäuses 12 getrennt ist.

Das Spannelement 64 weist in den zu den jeweiligen Mitnehmerelementen 52 benachbarten Abschnitten jeweils eine axiale Ausnehmung 70 auf, welche zusammen mit dem Mitnehmergehäuse 12 jeweils einen Druckraum 74 bildet. Der jeweilige Druckraum 74 erstreckt sich in axialer Richtung (in Figur 5 senkrecht zur Zeichenebene), vorzugsweise entlang der gesamten axialen Erstreckung des jeweiligen Mitnehmerelements 52, und ist an einem vorderen axialen Ende und an einem hinteren axialen Ende durch das Mitnehmergehäuse 12 begrenzt. Der jeweilige Druckraum 74 ist über eine der radialen Bohrung 102 des unter Bezugnahme auf die Figuren 1 bis 4 beschriebenen Ausführungsbeispiels entsprechende Hydraulikleitung 98 mit Hydraulikmedium 78 beaufschlagbar.

Das Spannelement 64 weist in den zu den Druckräumen 74 benachbarten Abschnitten eine verhältnismäßig dünne Wandung 80 auf, welche durch Beaufschlagung des jeweiligen Druckraums 74 mit unter Druck stehendem Hydraulikmedium elastisch verformbar ist, sodass die Mitnehmerelemente 52 - wie vorstehend unter Bezugnahme auf die Figuren 1 bis 4 beschrieben - in ihrer jeweiligen Mitnehmerelementführung 58 eingespannt werden können.

Im Übrigen wird auf die vorstehende Beschreibung zu Figuren 1 bis 4 Bezug genommen.

## Patentansprüche

1. Mitnehmereinrichtung (10) zur Drehmitnahme und Fixierung eines zwischen zwei Spitzen aufgenommenen Werkstücks, umfassend ein Mitnehmergehäuse (12), welches zum Antrieb um eine Drehachse (14) mit einer Antriebseinrichtung verbindbar ist, und mindestens ein Mitnehmerelement (52), welches in einer diesem Mitnehmerelement (52) zugeordneten Mitnehmerelementführung (58) verschiebbar gelagert und mit einem freien Mitnehmerende mit (54) einer Stirnseite eines Werkstücks oder mit einem in die Stirnseite eingreifenden Zwischenelement in Eingriff bringbar ist, **dadurch gekennzeichnet, dass** die Mitnehmereinrichtung (10) eine Spanneinrichtung (66) mit mindestens einem hydraulisch betätigbaren Spannelement (64) aufweist, welches das mindestens eine Mitnehmerelement (52) wahlweise für eine Verschiebung in dessen Mitnehmerelementführung (58) freigibt oder das mindestens eine Mitnehmerelement (52) spielfrei einspannt.

2. Mitnehmereinrichtung (10) nach Anspruch 1, **dadurch gekennzeichnet, dass** das mindestens eine Spannelement (64) eine Führungsfläche (56) für das mindestens eine Mitnehmerelement (52) bildet.

3. Mitnehmereinrichtung (10) nach einem der voranstehenden Ansprüche, **dadurch gekennzeichnet, dass** das mindestens eine Spannelement (64) hülsenförmig ausgebildet ist.

4. Mitnehmereinrichtung (10) nach einem der voranstehenden Ansprüche, **dadurch gekennzeichnet, dass** das mindestens eine Spannelement (64) - zum Einspannen des mindestens einen Mitnehmerelements (52) - mit Hydraulikmedium (78) beaufschlagbar ist.

5. Mitnehmereinrichtung (10) nach Anspruch 4, **dadurch gekennzeichnet, dass** das mindestens eine Spannelement (64) durch Beaufschlagung mit unter Druck stehendem Hydraulikmedium (78) elastisch verformbar ist.

6. Mitnehmereinrichtung (10) nach einem der voranstehenden Ansprüche, **dadurch gekennzeichnet, dass** das mindestens eine Spannelement (64) an mindestens einen Druckraum (74A, 74B) angrenzt, in welchem ein Hydraulikmedium (78) angeordnet ist.

7. Mitnehmereinrichtung (10) einem der voranstehenden Ansprüche, **dadurch gekennzeichnet, dass** sich das mindestens eine Mitnehmerelement (52) an einem in einem Abstützraum (92) angeordneten Hydraulikmedium (78) abstützt.

8. Mitnehmereinrichtung (10) nach Anspruch 7 bei Rückbezug auf Anspruch 6, **dadurch gekennzeichnet, dass** der Abstützraum (92) mit dem mindestens einen Druckraum (74A, 74B) fluidwirksam verbunden ist.

9. Mitnehmereinrichtung (10) nach einem der Ansprüche 7 oder 8, **dadurch gekennzeichnet, dass** der Abstützraum (92) eine der Anzahl der Mitnehmerelemente (52) entsprechende Anzahl von Kolbenräumen (82) und einen mit dem Kolbenraum / den Kolbenräumen (82) fluidwirksam verbundenen Kopplungsraum (90) umfasst, wobei jedem Mitnehmerelement (52) jeweils ein Kolbenraum (82) zugeordnet ist.

10. Mitnehmereinrichtung (10) nach Anspruch 9, **dadurch gekennzeichnet, dass** in jedem Kolbenraum (82) ein in diesem verschiebbar gelagerter Kolben (84) angeordnet ist, an welchem sich das jeweilige Mitnehmerelement (52) abstützt.

11. Mitnehmereinrichtung (10) nach einem der voranstehenden Ansprüche, **dadurch gekennzeichnet, dass** die Mitnehmereinrichtung (10) eine Beaufschlagungseinrichtung (106) zur Beaufschlagung des mindestens einen Mitnehmerelements (52) in Richtung des zu fixierenden Werkstücks aufweist.

12. Mitnehmereinrichtung (10) nach Anspruch 11 bei Rückbezug auf einen der Ansprüche 7 bis 10, **dadurch gekennzeichnet, dass** der Abstützraum (92) mittels der Beaufschlagungseinrichtung (106) mit Hydraulikmedium (78) beaufschlagbar ist.

13. Mitnehmereinrichtung (10) nach Anspruch 12, **dadurch gekennzeichnet, dass** die Beaufschlagungseinrichtung (106) einen mit dem Abstützraum (92) fluidwirksam verbundenen Beaufschlagungsraum (108) und einen in dem Beaufschlagungsraum (108)verschiebbar gelagerten Beaufschlagungskolben (118) umfasst.

14. Mitnehmereinrichtung (10) nach einem der voranstehenden Ansprüche, **dadurch gekennzeichnet, dass** die Mitnehmereinrichtung (10) einen in einer Zentrierspitzenaufnahme (26) des Mitnehmergehäuses (12), vorzugsweise spielfrei, angeordneten Zentrierspitzenkörper (28) aufweist, dessen Zentrierspitze (32) mit einer Stirnseite eines Werkstücks in Eingriff bringbar ist.
